# EUROPÄISCHE PATENTANMELDUNG

(11) **EP 2 071 257 A1**
(43) Veröffentlichungstag der Anmeldung: **17.06.2009**
(21) Anmeldenummer: 08018086.2
(22) Anmeldetag: 15.10.2008
(51) Int. Cl.: F25B 45/00

(54) **Integriertes Befüllungs- und Entleerungssystem für Klimaanlagen**

(30) Priorität: 11.12.2007 DE 102007059544
(71) Anmelder: Linde Aktiengesellschaft, 80807 München (DE)
(72) Erfinder: Bayerl, Willi, 82041 Deisenhofen (DE)

(57) **Zusammenfassung**

Die Erfindung beschreibt ein System zum Austausch von kohlendioxidhaltigen Kältemittel in Klimaanlagen von Fahrzeugen (1) oder stationären Klimaanlagen. Das System besteht aus einem Vorratsbehälter (7) für das Kältemittel, einer Einrichtung zur Festlegung der zu füllenden Kältemittelmenge (8), einer Vakuumpumpe (6), einer Einrichtung zur Aufreinigung (4) des Kältemittels und einer Analyseeinrichtung (5) für das aufgereinigte Kältemittel.

## Beschreibung

Die Erfindung betrifft ein System zum Austausch von Kältemittel in Klimaanlagen von Fahrzeugen oder stationären Klimaanlagen. Die Erfindung wird am Beispiel eines Systems zum Austausch eines kohlendioxidhaltigen Kältemittels mit einer odorierten Komponente beschrieben, ist aber prinzipiell zum Austausch eines beliebigen Kältemittels geeignet, welches eine Komponente enthält, die nicht ohne Aufbereitung an die Umwelt abgegeben werden kann.

Aus umwelttechnischen Gründen wird bei der derzeitigen Entwicklung von Klimaanlagen deutlich mehr auf Klimaschutz geachtet. Nach einer Untersuchung zahlreicher Alternativen zum derzeit verwendeten Kältemittel haben sich daher die Fahrzeughersteller im Verband deutscher Automobilbauer darauf verständigt, dass besonders umweltfreundliche, natürliche Kältemittel R744 zukünftig in allen Fahrzeugklimaanlagen einzusetzen. Damit kann der direkte Treibhauseffekt einer Klimaanlage gegenüber der bisher eingesetzten Technologie auf ein Tausendstel reduziert werden. Das Kältemittel R744 besteht hauptsächlich aus Kohlendioxid. Bei einem Einsatz eines geruchs- und farblosen Gases wie Kohlendioxid als Kältemittel in einer Klimaanlage in Fahrzeugen oder geschlossenen Räumen ist darauf zu achten, dass Leckagen vermieden und ausreichende Wamsysteme installiert werden. Eine Verdrängung der Luft im Fahrzeuginneren oder im Inneren des Raumes durch das Kältemittel würde andernfalls eine erhebliche Gefahr für die darin befindlichen Personen bedeuten. Aus diesem Grund wird dem Gas meist eine stark odorierte Komponente zugesetzt, wodurch im Raum befindliche Personen vor Leckagen gewarnt werden.

Ein System zur Befüllung einer derartigen Klimaanlage eines Fahrzeuges mit einem Kältemittel, welches überwiegend aus Kohlendioxid besteht, wird in der Patentschrift US20060101834 beschrieben. Bei der Befüllung wird eine Druckgasflasche, welche das gasförmige Kältemittel enthält, an die Klimaanlage des Fahrzeuges angeschlossen. Die Kontrolle des Füllstandes erfolgt dabei über eine Messung des Druckes des Kältemittels in der Klimaanlage des Fahrzeuges.

Für einen routine- und serienmäßigen Einsatz eines derartigen Kältemittels in Klimaanlagen von Fahrzeugen oder anderen stationären Klimaanlagen ist es jedoch notwendig, ein System zu entwickeln, welches eine gefahrlose Entleerung und Neubefüllung derartiger Klimaanlagen mit Kältemitteln zu routinemäßigen Wartungsarbeiten erlaubt. Bei einer Entleerung derartiger Klimaanlagen kann das Kältemittel nicht frei in die Umwelt abgeführt werden, da die odorierte Komponente stark geruchsbelästigend und gesundheitsschädigend ist.

Der vorliegenden Erfindung liegt daher die Aufgabe zugrunde, ein System zum Austausch von Kältemittel mit umweltschädlichen oder -belästigenden Komponenten in Klimaanlagen von Fahrzeugen oder stationären Klimaanlagen derart auszugestalten, dass eine einfache Entleerung und Neubefüllung der Klimaanlagen mit Kältemittel gewährleistet ist, ohne dass dabei große Mengen von umweltschädlichen oder - belästigenden Komponenten des Kältemittels in die Umwelt entweichen.

Die vorliegende Aufgabe wird durch ein System der eingangs erwähnten Art gelöst, welches durch einen Vorratsbehälter für das Kältemittel, eine Einrichtung zur Festlegung der zu füllenden Kühlmittelmenge, eine Vakuumpumpe, eine Einrichtung zur Aufreinigung des Kältemittels und eine Analyseeinrichtung für das aufgereinigte Kältemittel gekennzeichnet ist.

Das erfindungsgemäße System wird an den Kältemittelkreislauf der Klimaanlage angeschlossen. Das unter Druck stehende Kältemittel wird über eine Einrichtung zur Aufreinigung des Kältemittels, gefolgt von einer Analyseeinrichtung für das aufgereinigte Kältemittel in die Umwelt geleitet. Gemäß der Erfindung wird das Kältemittel in der Einrichtung zur Aufreinigung von umweltschädlichen oder umweltbelästigenden Komponenten befreit. Die Reinigung wird durch die nachfolgende Analyseeinrichtung kontrolliert. Das anschließend an die Umwelt abgegebene Kältemittel besteht somit hauptsächlich aus unschädlichen Komponenten. Das restliche, im Kältemittelkreislauf der Klimaanlage verbliebene, Kältemittel wird von einer Vakuumpumpe ebenfalls über die Einrichtung zur Aufreinigung des Kältemittels und der nachfolgenden Analyseeinrichtung aus dem Kältemittelkreislauf entfernt und an die Umwelt abgegeben. Anschließend wird der Kältemittelkreislauf der Klimaanlage über die Einrichtung zur Festlegung der zu füllenden Kältemittelmenge aus dem Vorratsbehälter für das Kältemittel neu befüllt.

Mit besonderem Vorteil dient das erfindungsgemäße System zum Austausch eines Kältemittels, welches hauptsächlich aus Kohlendioxid und mindestens einer odorierten Komponente besteht.

In einer bevorzugten Ausgestaltung der Erfindung besteht die Einrichtung zur Aufreinigung des Kältemittels aus mindestens einen, bevorzugt austauschbaren, Absorber. Die Analyseeinrichtung besteht vorteilhafter Weise aus einer Indikatoreinrichtung. Dies kann ein Indikatorröhrchen, welches durch Farbwechsel einen Durchbruch der zu entfernenden Geruchskomponente anzeigt, ein spezifisches Messgerät oder ein Ventil zur Entnahme einer Duftprobe sein. Bevorzugt wird die Kapazität des Absorbers derart gewählt, dass sie der Menge der odorierten Komponente entspricht, welche sich im Vorratsbehälter für das Kältemittel befindet. Der Vorratsbehälter für das Kältemittel besteht zweckmäßiger Weise aus einer Druckgasflasche mit einem Dosierventil.

Mit der vorliegenden Erfindung gelingt es insbesondere, ein einfaches System für die Entleerung und Neubefüllung eines Kältemittelkreislaufes mit einem kohlendioxidhaltigen Kältemittel in der Klimaanlage von Fahrzeugen oder in stationären Klimaanlagen zur Verfügung zu stellen.

Im Folgenden soll die Erfindung anhand eines Ausführungsbeispieles näher erläutert werden.

### Es zeigt

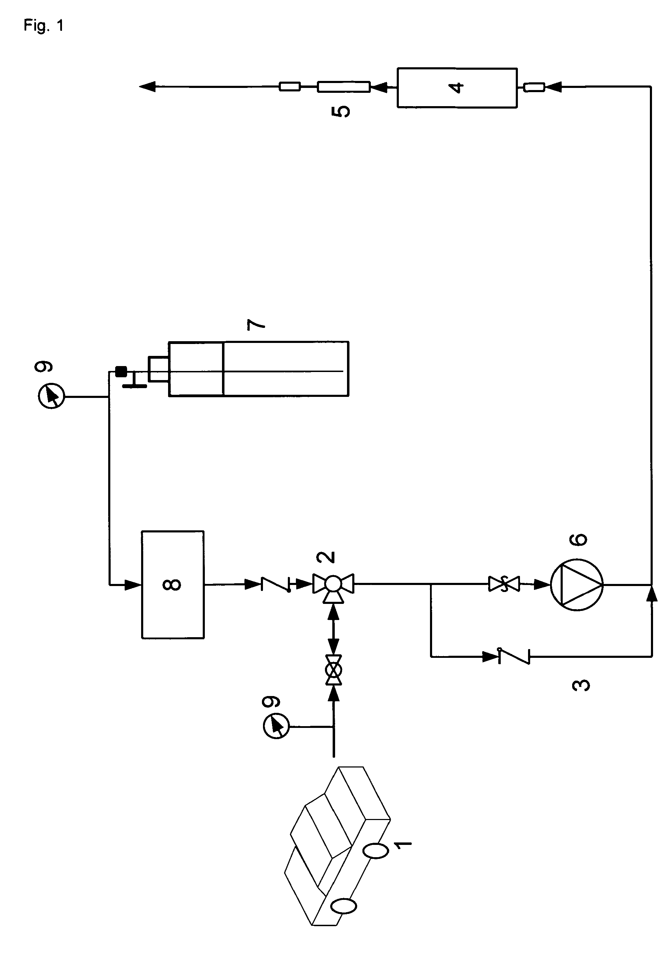

Figur 1 ein Ausführungsbeispiel der Erfindung

Figur 1 zeigt das Schema eines Ausführungsbeispiels der Erfindung zur Entleerung und Neubefüllung der Klimaanlage eines Fahrzeuges mit kohlendioxidhaltigem Kältemittel. Die Klimaanlage des Fahrzeuges (1) wird an einem Drei-Wege-Ventil (2) des Systems zur Entleerung und Neubefüllung angeschlossen. Solange das Kältemittel im Kältemittelkreislauf des Fahrzeuges (1) unter Druck steht, wird es über das Drei-Wege-Ventil (2) direkt (3) in den Absorber (4) zur Entfernung der odorierten Komponente geleitet. Das von der odorierten Komponente befreite Kältemittel wird über einen Indikator (5) zur Kontrolle der Adsorberleistung über eine Abgasleitung in die Umwelt abgegeben. Das restliche im Kältemittelkreislauf des Fahrzeuges (1) verbleibende Kältemittel wird über eine Vakuumpumpe (6) aus dem Kältemittelkreislauf entfernt und ebenfalls über den Absorber (4) und den Indikator (5) in die Abgasleitung zur Abgabe an die Umwelt geführt. Nach vollständiger Entleerung des Kältemittelkreislaufes des Fahrzeugs (1) wird das Drei-Wege-Ventil (2) derart umgeschaltet, dass eine Neubefüllung des Kältemittelkreislaufes mit Kältemittel aus der Druckgasflasche mit Dosierventil (7) erfolgen kann. Das Kältemittel aus der Druckgasflasche mit Dosierventil (7) wird dabei über eine Einrichtung zur Festlegung der zu füllenden Kältemittelmenge (8) geführt. Die Einrichtung zur Festlegung der zu füllenden Kältemittelmenge (8) arbeitet dabei bevorzugt nach dem Prinzip der gravimetrischen Mengenbestimmung. Die Kontrolle des Füllstandes erfolgt dabei über die beiden Druckmesser (9). Nach erfolgreicher Befüllung wird der Kältemittelkreislauf des Fahrzeuges (1) vom System abgetrennt und die in den Füllleitungen verbliebenen Kältemittelreste ebenfalls über den Absorber (4) entsorgt.

## Patentansprüche

1. System zum Austausch von Kältemittel in Klimaanlagen von Fahrzeugen (1) oder stationären Klimaanlagen, **gekennzeichnet durch** einen Vorratsbehälter für das Kältemittel (7), eine Einrichtung zur Festlegung der zu füllenden Kältemittelmenge (8), eine Vakuumpumpe (6), eine Einrichtung zur Aufreinigung des Kältemittels (4) und eine Analyseeinrichtung (5) für das aufgereinigte Kältemittel.

2. System nach Anspruch 1, **dadurch gekennzeichnet, dass** das Kältemittel hauptsächlich aus Kohlendioxid und mindestens einer odorierten Komponente besteht.

3. System nach Anspruch 1 oder 2, **dadurch gekennzeichnet, dass** die Einrichtung zur Aufreinigung des Kältemittels (4) mindestens einen, bevorzugt austauschbaren, Absorber beinhaltet.

4. System nach einem der Ansprüche 1 bis 3, **dadurch gekennzeichnet, dass** die Analyseeinrichtung (5) aus einer Indikatoreinrichtung besteht.

5. System nach einem der Ansprüche 1 bis 4, **dadurch gekennzeichnet, dass** der Vorratsbehälter (7) aus einer Druckgasflasche mit einem Dosierventil besteht.
